# EUROPÄISCHE PATENTSCHRIFT

(11) **EP 0 414 033 B1**
(45) Veröffentlichungstag und Bekanntmachung des Hinweises auf die Patenterteilung: **04.05.1994**
(21) Anmeldenummer: 90115119.1
(22) Anmeldetag: 07.08.1990
(51) Int. Cl.: G01N 27/28, G01N 27/30

(54) **Verfahren zur kontinuierlichen Elektrolytzuführung und Referenzelektrodensystem**
Method for continuous electrolyte transfer and reference electrode system
Méthode pour le transfert continu d'électrolyte et électrodes de référence

(30) Priorität: 18.08.1989 DE 8909902 U; 12.12.1989 DE 3940948
(43) Veröffentlichungstag der Anmeldung: 27.02.1991
(73) Patentinhaber: Endress + Hauser Conducta Gesellschaft für Mess- und Regeltechnik mbH + Co., D-70839 Gerlingen (DE)
(72) Erfinder: Stellmacher, Klaus, D-7261 Oberreichenbach (DE)
(74) Vertreter: Otte, Peter, Dipl.-Ing.

(56) Entgegenhaltungen:
- EP-A- 0 271 764
- DE-A- 3 834 240
- FR-A- 2 407 469
- US-A- 4 378 280
- US-A- 4 578 170

## Beschreibung

### Stand der Technik

Die Erfindung geht aus von einem Verfahren zur kontinuierlichen Elektrolytzuführung zu einer Referenzelektrode nach dem Oberbegriff des Anspruchs 1 und einem Referenzelektrodensystem nach dem Oberbegriff des Anspruchs 9 zur Durchführung des Verfahrens.

Referenzsysteme in der analytischen Chemie, also Bezugselektroden, die ein konstantes Referenzpotential, insbesondere für die pH- und Redox-Messung zur Verfügung stellen, sind bekannt (DE-OS 32 03 406, DE-OS 32 03 407, DE-OS 34 11 800 und schließlich auch europäische Patentanmeldung 0299372 A2), auch in Form sogenannter Elektrolyt-Brücken-Systeme mit zwei hintereinander geschalteten Diaphragmen oder in Form einer beispielsweise zur pH-Messung geeigneten Einstabmeßkette (pH-Kombi-Elektrode), bei der die pH-sensitive Elektrode und die Referenzelektrode in einem Glasröhrchen gemeinsam untergebracht sind.

Die bekannten Bezugselektroden benutzen Diffusionsübergänge in vielfältiger Form, beispielsweise als Keramikdiaphragma, Platindiaphragma, Teflondiaphragma, aber auch sehr kleine, in die Glasröhrchenseitenwand eingebrachte Lochöffnungen, wobei der verwendete Bezugselektrodenelektrolyt eine KCl- oder eine KNO₃-Lösung in flüssiger Form oder auch ein Gel geeigneter Konsistenz sein kann und dann beispielsweise aus Agar-Agar, aus Polyacrylmaterial oder aus PVC besteht. Ein solches Gel wirkt als Molekularsieb, in welches dann üblicherweise KCl-Ionen eingelagert sind.

Bezugselektroden beinhalten normalerweise eine Halbzelle aus Silber/Silberchlorid, die in eine Lösung konstanter Chlorid-Ionenkonzentration eintaucht. Diese Lösung steht dann über das jeweils vorgesehene Diaphragma mit dem Meßmedium in Verbindung.

Bei solchen Bezugssystemen ist allgemein problematisch der Umstand, daß diese wegen der nicht auszuschließenden Möglichkeit einer Kontamination von außen nicht potentialkonstant sind, wobei durch das eine Pforte für den Bezugselektrolyten zum Meßmedium bildende Diaphragma eine Diffusion in beiden Richtungen erfolgen kann, etwa veranlaßt durch Konzentrationsunterschiede oder Druckunterschiede zwischen dem Bezugselektrolyten und dem Meßmedium. Es ist auch eine Verstopfung des Diaphragmas durch Kristallisation oder dessen Zusetzen mit sonstigen Medien möglich. Schließlich ist eine Vergiftung des Bezugselektrolyten und des Ableitsystems vom Meßmedium her nicht ausgeschlossen.

In Gegenrichtung kann sich ein Verlust an Bezugselektrolyt oder durch sogenannte Auswaschungen Konzentrationsänderungen im Elektrolyten ergeben. Es ist in diesem Zusammenhang daher auch schon bekannt, im Elektrodenbereich eine Öffnung vorzusehen, durch welche ein Nachfüllen von frischem Referenzelektrolyten möglich ist (US-A-4,378,280).

Weitere Probleme, die im Bereich eines Referenzsystems auftreten können, sind in der weiter vorn schon genannten EP 0299372 A2 ausführlich aufgeführt, so daß hierauf nicht weiter eingegangen zu werden braucht.

Eine Möglichkeit zur Vermeidung einer Vielzahl sich im Bereich des Bezugselektrolyten und seines Diaphragmas ergebenden Probleme besteht darin, daß man ein Referenzsystem mit einem fließenden Elektrolyten vorsieht, wobei über eine geeignete Zuflußarmatur flüssiger Bezugselektrolyt in die den Elektrolyten enthaltende Kammer unter speziell erzeugtem Druck oder auch nur durch den statischen Wassersäulendruck zugeführt wird. Der Elektrolyt entwickelt dann eine allgemeine Strömung zum Diaphragma hin und durch dieses hindurch, so daß kontinuierlich sehr geringe Bezugselektrolytmengen in das Meßmedium eintreten, andererseits aber das Referenzsystem in einwandfreiem Zustand aufrecht erhalten und das Diaphragma gereinigt und von innen gespült wird, so daß Vergiftungen nicht auftreten können. Verwendet man in diesem Zusammenhang ein Brückenelektrolytsystem, so kann der innere Elektrolyt auch ein Gel sein, der über ein erstes inneres Diaphragma mit einer weiteren äußeren Kammer in Verbindung steht, die dann über ein äußeres Diaphragma in das Meßmedium eintaucht. Es ist dann der flüssige Elektrolyt in der äußeren Kammer, der als fließender Elektrolyt über das äußere Diaphragma austritt und dabei am inneren, beispielsweise höher gesetzten Diaphragma vorbei fließt. Hierdurch ergeben sich zwar eine Vielzahl von Vorteilen, andererseits ist die Zuführung des fließenden Elektrolyts aber von besonderer Umständlichkeit, da es bisher notwendig gewesen ist, den den fließenden Bezugselektrolyten aufnehmenden Raums über eine nach außen weisende Abzweigung, also bei einer Einstabmeßkette beispielsweise ein nach oben abgewinkeltes Glasröhrchen und eine an dieses angesetzte Schlauchverbindung mit einem den Bezugselektrolyten KCl oder auch KNO₃ enthaltendem Gefäß zu verbinden. Der Elektrolyt fließt dann über diese Schlauch- und Zufluß-Armaturverbindung mit einem solchen Druck in die Elektrolytkammer, daß ein eventueller Gegendruck des Meßmediums überwunden wird.

Da es allerdings vergleichsweise häufig notwendig ist, das Referenzsystem - bei einer Einstabmeßkette insbesondere auch die Meßelektrode - zu Reinigungs-, Wartungszwecken oder um die Elektroden zu eichen und zu ersetzen, aus den Halterungen zu entnehmen, mußte bisher für den Elektrodenwechsel der dem Bezugselektrolyten zuführende Schlauch abgezogen, das Gefäß geleert und die flüssige Elektrolytzufuhr insgesamt unterbunden werden, wobei ein Nachtropfen auch in dem Bereich des Elektrodenkopfes und damit dessen Zerstörung nicht selten unvermeidbar war.

Jedenfalls muß man zum Elektrodenwechsel als erstes den Druck im Bezugselektrolyten ablassen, anschließend das KCl-Gefäß entleeren, den Schlauch entleeren, den Schlauch abziehen, das System entlüften, kann dann mit aller Vorsicht die Elektrode entnehmen, wobei der Bezugselektrolyt überall herumtropft und muß diese Schritte beim Wiedereinsetzen in umgekehrter Reihenfolge erneut durchführen und das System entlüften.

Der Erfindung liegt daher die Aufgabe zugrunde, hier Abhilfe zu schaffen und einen Elektrodenwechsel bei einer "fließenden Referenzelektrode", auch bei Ausbildung in Form einer Einstabmeßkette, zu ermöglichen, ohne daß man sich um den fließenden Bezugselektrolyten und dessen Unterbrechung überhaupt zu kümmern braucht, auch wenn dieser unter erheblichem Druck stehen sollte.

### Vorteile der Erfindung

Die Erfindung löst diese Aufgabe mit den kennzeichnenden Merkmalen des Hauptanspruchs und hat den Vorteil, daß bei entsprechender Umgestaltung der Einsatzmöglichkeiten des Elektrodenteils in die Fassung, die Lafette oder ein äußeres Lagerrohr bei dem üblicherweise manuellen Wechsel (Entnahme und Einsatz des Elektrodenteils in das Lagerrohr) eine automatische Überwachung und Unterbrechung sowie Wiedereröffnung der Elektrolytzufuhr erfolgt, wobei der Elektrolytzufluß von außen nach innen verlegt ist und daher außen auch keine störenden Schlauchverbindungen an Anschlußglasröhrchen angeschlossen zu werden brauchen. Hierdurch reduziert sich nicht nur die mögliche Bruchgefahr, sondern der gesamte Aufwand bei solchen Meßsystemen in der analytischen Chemie, die mit einem nachfüllbaren Spülelektrolyten arbeiten, in entscheidender Weise sowohl vom Wartungs- und Bedienungsaufwand als auch hinsichtlich der Komplexität des strukturellen Aufbaus.

Vor allen Dingen erhöht sich durch die Erfindung die Genauigkeit des Meßsystems, da stets sichergestellt ist, daß nicht durch menschliche Unzulänglichkeit bei Wartung oder Wiederanschluß Störungen auftreten, die unter Umständen erst sehr viel später bemerkt werden und bei kontinuierlich ablaufenden Prozessen zu erheblichen Schäden führen können.

Ein weiterer entscheidender Vorteil bei vorliegender Erfindung besteht darin, daß die sonst praktisch unvermeidbare Panscherei mit dem flüssigen Spülelektrolyten für die Referenzelektrode völlig entfällt, die ja nicht nur durch das An- und Abtrennen der Schlauchverbindungen entsteht, sondern auch deshalb, weil, etwa nach Wartung oder Ersatz des Elektrodenteils, dieses auch entlüftet werden muß, zumal das sonst erforderliche häufige Trennen einer Schlauchverbindung nicht zu deren Dichtigkeit beiträgt.

Die Erfindung läßt sich auf beliebige Arten von Referenzelektroden, bevorzugt in Verbindung mit Einstabmeßketten anwenden, bei denen ein Elektrodeneinsatz in Form eines ein inneres Trägerrohr umfassenden Elektrodenteils in ein äußeres Trägerrohr bzw. eine für bestimmte Anwendungszwecke insofern genormte Aufnahmelafette eingesetzt werden muß, die dann ihrerseits über Flanschverbindungen im Bereich des Meßmediums, in dieses eintauchend, montiert wird.

Die Erfindung eignet sich daher auch insbesondere bei solchen Elektrodenhalterungen, die eine geeignete Meßelektrode, beispielsweise pH-Elektrode, mit einem Meßmedium etwa in Form einer Durchfluß-, Anbauarmatur oder Eintaucharmatur in Verbindung bringen.

Durch die in den Unteransprüchen aufgeführten Maßnahmen sind vorteilhafte Weiterbildungen und Verbesserungen der Erfindung möglich. Besonders vorteilhaft ist die Realisierung der durch manuellen Eingriff bewirkten Entnahme und Einführbewegung des Elektrodenteils in die Lagerhülse mittels eines innen liegenden Bajonettverschlusses, so daß durch eine einzige, wesentlich weniger als eine Umdrehung durchführende Einsatz-Drehbewegung das Elektrodenteil sicher zum Einschnappen in die abgedichtete Einsatzposition gebracht werden kann, im Gegensatz zu den bisher erforderlich gewesenen Manipulationen, das Elektrodenteil mittels einer Vielzahl von Drehungen in das Lagerrohr einzuschrauben.

Das Befestigungsbajonett ist ferner gegen Anlagerungen von Schmutz oder sonstigen Störungen, im Gegensatz zu Gewindegängen, unempfindlich, es neigt bei seiner Betätigung nicht zum "Fressen" und stellt darüber hinaus eine merkliche relative Hubbewegung zur Verfügung, die sicherstellt, daß den Bajonettverschlußbereich zwischen sich einschließende Dichtungen in ihre Dichtpositionen einlaufen.

Dabei ist ferner von besonderem Vorteil die Ausbildung eines aus der Einsatzbewegung des Elektrodenteils in sein Lagerrohr resultierenden Ventilbereichs, der jeweils immer dann öffnet, wenn das Elektrodenteil eingesetzt wird, wobei sich entsprechend kommunizierende Durchlässe ergeben, und schließt, wenn das Elektrodenteil entnommen wird.

In einer weiteren vorteilhaften Ausgestaltung nutzt die vorliegende Erfindung dabei nicht, wie zu vermuten wäre, die Hubbewegung beim Einsetzen des Elektrodenteils in das Lagerrohr zur Ventilbetätigung aus, sondern die sich aus der Bajonettbetätigung ergebende Drehbewegung, da es nur auf diese Weise gelingt, auch bei solchen, einer engen Normung unterworfenen Trägerlafetten im Bereich der analytischen Chemie die in dieser Weise vorgegebenen Abmessungen einzuhalten (üblicher Durchmesser einer solchen genormten Trägerlafette in numerischer, die Erfindung nicht einschränkender Größe lediglich 45 mm) und dennoch eine einwandfreie Funktion und Dichtigkeit für den insofern "fließenden Elektrolyten" zu garantieren.

Schließlich besteht eine weitere vorteilhafte Ausgestaltung vorliegender Erfindung darin, die Einsatzbewegung so in Abstufungen aufzuteilen, und zwar beispielsweise durch eine entsprechende ergänzende Abtreppung im Bajonettverschlußbereich, daß eine als erstes durchgeführte Einsatzbewegung das Elektrodenteil zunächst so weit in das Lagerrohr einbringt, daß bei hierdurch schon bewirkter Ventilöffnung eine Entlüftung der Durchfluß- und Kammerbereiche der Referenzelektrode durch den dann schon fließenden Referenzelektrolyten möglich ist, der auch merklich nach außen dringt, so daß die Wartungsperson dies feststellen kann, bis mit einer weiteren Einführungsenddrehung das Elektrodenteil vollständig in das Lagerrohr eingeführt ist und eine untere Enddichtung ebenfalls schließt. Hieraus ergibt sich dann die Sicherheit für die Wartungsperson, daß alles in einwandfreier Betriebsfunktion zusammengefügt ist.

### Zeichnung

Ausführungsbeispiele der Erfindung sind in der Zeichnung dargestellt und werden in der nachfolgenden Beschreibung näher erläutert. Es zeigen:
- Fig. 1: schematisiert im Schnitt den kompletten Zusammenbau eines Meßsystems mit äußerem Lagerrohr und von diesem aufgenommenem Elektrodenteil einschließlich des Ventilmechanismus;
- Fig. 2: gegenüber der Ausführungsform der Fig. 1 verkleinert in einer Teildraufsicht die Ventil-Drehhülse;
- Fig. 3: eine mögliche Ausführungsform des Elektrodenteils mit Brückenelektrolyt für das Referenzelektrodensystem und
- Fig. 4: eine weitere mögliche Ausführungsform des Elektrodenteils mit fließendem Referenzelektrolyten und unterem Ringspaltdiaphragma.

### Beschreibung der Ausführungsbeispiele

Der Grundgedanke vorliegender Erfindung besteht darin, bei einem Referenzelektrodensystem mit fließender Elektrolytzuführung diese so zu automatisieren, daß sich eine automatische Absperrung des weiteren Elektrolytzuflusses sowie eine erneute Öffnung des Zuflusses dann ergibt, wenn der Elektrodenteil aus seiner Fassung jeweils entnommen bzw. in diese wieder eingesetzt wird.

Dabei wird zur Sperrung bzw. zur Öffnung des Zuflusses ein Ventilsystem ausgenutzt, welches auf die Entnahme bzw. Einführbewegung des Elektrodenteils reagiert, genauer gesagt auf die beim Einführen des Elektrodenteils erforderliche Drehbewegung, die auf eine Bajonettverschlußbewegung zurückgeht.

Bevor auf die Erfindung im einzelnen eingegangen wird, wird darauf hingewiesen, daß für sich gesehen die Bajonettverschlußverbindung zwischen dem Elektrodenteil und dem es aufnehmenden äußeren Lagerrohr schon beschrieben ist in dem nicht zum Stand der Technik gehörenden Gebrauchsmuster G 89 09 902.8, dessen Priorität hier beansprucht ist, so daß auf das Grundprinzip der Bajonettverbindung nur so weit eingegangen wird, wie hier noch zum Verständnis vorliegender Erfindung erforderlich.

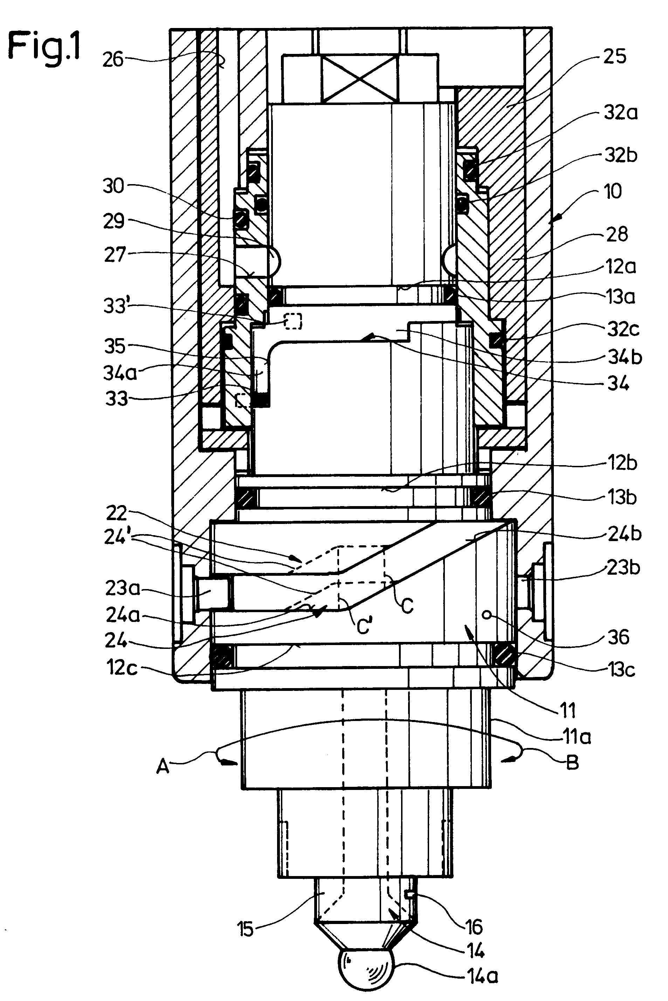

In der Darstellung der Fig. 1 ist ein äußeres, einen Elektrodenteil aufnehmendes Lagerrohr mit 10 bezeichnet; der in der Zeichnung der Fig. 1 mit 11 bezeichnete Elektrodenteil bzw. Elektrodeneinsatz ist zum besseren Verständnis der Erfindung von oben nach unten durchgehend nicht schraffiert dargestellt und besteht selbst aus einem äußeren, abgetreppten Gehäuse 11a mit mindestens zwei Ringnuten 12a, 12b und 12c, die jeweils Ringdichtungen 13a, 13b, 13c aufnehmen, üblicherweise O-Ringe.

Der Elektrodenteileinsatz kann im einfachsten Fall lediglich ein übliches Referenzelektrodensystem enthalten, mit der Maßgabe, daß bei diesem eine fließende Elektrolytzuführung vorgesehen ist; bei dem dargestellten bevorzugten Ausführungsbeispiel handelt es sich um die Realisierung eines Elektrodenteils nach Art einer Einstabmeßkette, gegebenenfalls auch ergänzt durch einen zusätzlichen Temperatursensor, wobei nach innen im Elektrodeneinsatz 11 der Meßelektrodenteil 14 mit der Glasmembran 14a angeordnet sein kann, während sich, wie durch die gestrichelte Linienführung angedeutet, um die Meßelektrode herum nach außen die Elektrolytkammer 15 für das Bezugssysystem erstrecken kann, mit einem bei 16 angedeuteten Diaphragma.

Wesentlich ist lediglich, daß es sich bei dem dargestellten gesamten Meßsystem und dessen Referenzelektrodensystem um eine Ausbildungsform handelt, bei der aus den weiter vorn schon genannten Gründen eine druckabhängige Bezugselektrolytnachfüllung vorgesehen ist (Flüssigelektrolyt).

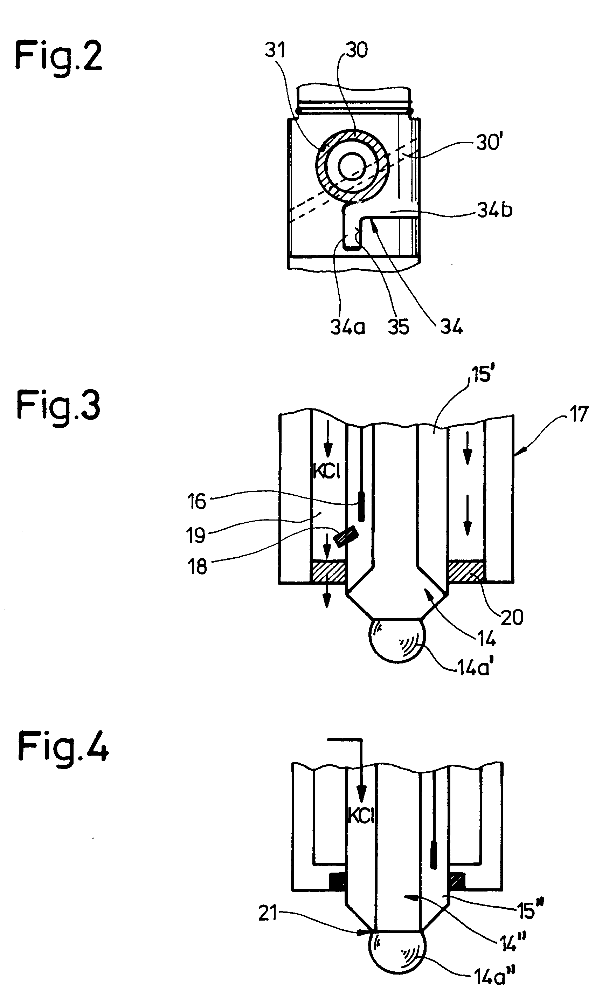

Um zunächst bei dem Elektrodenteil zu bleiben, wird gleich noch auf die Darstellungen der Figuren 3 und 4 eingegangen, wobei die Fig. 3 schematisiert und in Teildarstellung ein Referenzelektrodensystem 17 mit Brückenelektrolyt angibt. Hierbei ist die innere Meßelektrode 14′ von einer ersten (ringförmigen) Referenzelektrolytkammer 15′ umgeben mit Silber/Silberchloridableitung bei 17. Bevorzugt kann der in der inneren Elektrolytkammer 15′ enthaltene Referenzelektrolyt in Gelform ausgebildet sein, mit einem ersten inneren Diaphragma 18, welches einen Übergang bildet zu einer äußeren Elektrolytkammer 19, die dann von dem in diesem Fall flüssigen nachfüllbaren Spülelektrolyten, beispielsweise KCl, gefüllt und entsprechend der Pfeilrichtung auch durchströmt wird, mit einem unteren ringförmigen äußeren Diaphragma 20, aus welchem der äußere Elektrolyt dann, allerdings in vergleichsweise sehr geringen Mengen auch in das Meßmedium übertritt (indirektes Referenzsystem).

Ein solches Elektrodensystem ist dann, ebenso wie das Elektrodensystem ohne Brückenelektrolyt entsprechend der Fig. 4 in einem geeigneten Gehäuse wie mit 11 in Fig. 1 bezeichnet aufgenommen, wobei bei der Ausführungsform des Elektrodensystems der Fig. 4 (direktes Referenzsystem - die Elektrode des Referenzsystems wird gleich mit KCl durchströmt) die den flüssigen Bezugselektrolyten aufnehmende Referenzelektroden-Ringkammer 15˝ bis nach unten zur sensitiven Glasmembran 14a˝ der Meßelektrode 14˝ gezogen ist und dort im Übergang ein sogenanntes Ringdiaphragma 21 bildet. Dies sind daher zwei weitere mögliche Ausführungsformen des Elektrodenteils, wobei die jeweils den flüssigen füllbaren Referenzelektrolyten aufnehmende Kammer über entsprechende innere Bohrungen und Durchlässe im Gehäuse 11a des Elektrodenteils mit einer entsprechenden Zulauföffnung im Lagerrohr 10 über einen Ventilmechanismus verbunden ist, auf den weiter unten noch eingegangen wird. Ferner kann noch ein Meßverfahren mit hochgelegter Referenzelektrode erwähnt werden.

Das Befestigen des Elektrodeneinsatzes 11 im Lagerrohr 10 erfolgt mittels einer Gewindeverbindung, kann jedenfalls im einfachsten Fall so und dann in der nach dem Stand der Technik üblichen Weise, erfolgen, so daß der Elektrodeneinsatz im Lagerrohr von unten in Fig. 1 eingesetzt und dann festgeschraubt wird. Die Erfindung nützt diese Schraubbewegung in ihrer gleichzeitigen rotatorischen und axialen Verschiebung aus, um den schon erwähnten Ventilmechanismus bei der Entnahme zu öffnen bzw. beim Einsetzen wieder zu schließen, wodurch der Zufluß an flüssigem Spülelektrolyten für das Referenzsystem geöffnet bzw. unterbrochen wird.

Bei dem bevorzugten Ausführungsbeispiel ist die "Verschraubung" in Form eines innen liegenden und daher nicht verschmutzenden Bajonettsystems 22 ausgebildet, bestehend aus mindestens einem, vorzugsweise zwei Führungsstiften 23a, 23b, die in entsprechende Führungs-Gleitnuten 24 (es ist am Gehäuse 11a des Elektrodeneinsatzes nur eine sichtbar) eingreifen. Aus der Darstellung der Fig. 1 ist der Grundmechanismus ohne weiteres erkennbar; wird der Elektrodeneinsatz 11 im Sinne des Doppelpfeils A/B in der A-Richtung zur Entnahme gedreht, dann drückt sich durch das Zusammenwirken der Führungsstifte 23a, 23b mit den Führungsbahnen 24 der Elektrodeneinsatz schließlich nach unten heraus und kommt aus dem Lagerrohr frei.

Dabei verfügt (verfügen) die Führungsbahn(en) 24 über einen ersten, horizontal verlaufenden Teilbereich 24a und einen sich an diesen nach einem vorgegebenen Drehwinkel anschließenden, schräg ansteigenden Teil 24b, aus Gründen, die mit der hierdurch gleichzeitig bewirkten Aktivierung des Ventilmechanismus zusammenhängen. Jedenfalls sorgt der schräg ansteigende Teil 24b jeder Führungsbahn 24 dafür, daß durch die Drehbewegung und daher mit entsprechender Untersetzung die natürlich auch eine gewisse Klemmwirkung hervorrufenden Ringdichtungen 13a, 13b und 13c aus ihren zugeordneten Sitzen frei kommen, so daß dann der Elektrodeneinsatz leicht nach unten abgezogen und entnommen werden kann.

In das äußere Lagerrohr 10 ist zur Vereinfachung der den Ventilmechanismus aufnehmenden Strukturen noch ein zusätzlicher Rohreinsatz 25 eingesetzt, obwohl dessen Form und Funktionen auch von einem entsprechend innen bearbeiteten Lagerrohr selbst übernommen werden können. Der Rohreinsatz 25 bzw. das Lagerrohr verfügt jedenfalls über einen Zuflußkanal 26 für den zuzuführenden (Spül-)elektrolyten, wobei der Zuflußkanal als Tieflochbohrung im Rohreinsatz 25 ausgebildet sein kann, die in eine Querbohrung 27 übergeht. Diese Querbohrung ist schon Teil des Ventilmechanismus, der eine über mehrere Dichtungen im Rohreinsatz aufgenommene, abgestufte Drehhülse 28 umfaßt.

Die Queröffnung der den Zufuhrkanal 26 bildenden Tieflochbohrung kann im übrigen dadurch bearbeitungstechnisch hergestellt werden, daß der Rohreinsatz 25 innen bis auf einen solchen Bohrungsdurchmesser aufgebohrt wird, daß die Tieflochbohrung hierdurch angeschnitten wird.

Die den Durchflußkanal 26 weiterführende Querbohrung 27 in der Drehhülse 28 mündet vorzugsweise in einen Ringkanal 29 im Gehäuse 11a des Elektrodeneinsatzes 11 ein, so daß bei jeder Drehposition der Drehhülse 28 der Elektrolytdurchfluß über dem Ringkanal 29 durch entsprechende, im einzelnen nicht weiter dargestellte innere Kanäle bis in die den (äußeren) Elektrolyten aufnehmende Referenzelektrolytkammer des oder der Meßsysteme erfolgen kann.

Dieser Elektrolytzufluß wird erkennbar dann unterbrochen, wenn die Drehhülse 28 so weit verdreht wird, daß deren Durchtrittsbohrung 27 nicht mehr mit der Öffnung des Zufuhrkanals 26 kommunizieren kann, wobei noch entsprechende Abdichtmittel vorgesehen sind, die bei dem bevorzugten Ausführungsbeispiel aus einer Ringdichtung, vorzugsweise O-Ring 30 bestehen können, die in einen die Durchtrittsbohrung 27 umgebenden Ringkanal 31 in der Außenwandung der Drehhülse 28 eingelegt ist - siehe hierzu auch die Darstellung der Fig. 2, der auch entnommen werden kann, daß eine vergleichbare Abdichtung auch durch eine schräg um den gesamten äußeren Körper der Drehhülse 28 laufende Ringdichtung 30′ erzielt werden kann.

Dabei ist die Drehhülse 28 nach außen und nach innen noch über eine Vielzahl weiterer Ringdichtungen in Form von O-Ringen 32a, 32b, 32c abgedichtet.

Um den von der Drehhülse gewährleisteten Ventilmechanismus zum Ansprechen zu bringen, ist es daher erforderlich, die Drehhülse 28 mindestens um vorgegebene Winkelbeträge zu drehen, so daß deren Durchtrittsbohrung 27 entweder auf den Elektrolytzufuhrkanal 26 ausgerichtet ist bzw. von diesem weggedreht ist , wobei dann die Abdichtung der weiteren Elektrolytzufuhr über die Dichtungen 32a, 32b und 32c erfolgt, während die Ringdichtung 30 ein mögliches Einlecken von sich im Ringspalt befindlichem Elektrolyt in dem Bereich der Durchtrittsbohrung 27 sicher verhindert.

Entsprechend einem wesentlichen Merkmal vorliegender Erfindung ist diese erforderliche Drehbewegung für das Öffnen und Schließen des Ventilmechanismus mit der weiter vorn schon erwähnten Dreh/Hubbewegung, verursacht durch einen äußeren manuellen Eingriff und im Ablauf gesteuert durch das erste Befestigungsbajonettsystem bei der Entnahme bzw. dem Einsatz des Elektrodenteils synchronisiert und von dieser abhängig.

Hierzu verfügt die Drehhülse 28 über mindestens einen Mitnehmerstift 33, der in eine in geeigneter Weise ausgebildete Kulissenführung 34, die in die Außenwandung des Elektrodeneinsatzkörpers eingearbeitet ist, eingreift. Dies kann natürlich auch umgekehrt sein, wie im übrigen auch bei dem Bajonettverschlußsystem - die Führungs- bzw. Mitnehmerstifte können also jeweils am Gehäuse des Elektrodeneinsatzes angeordnet sein, während die Führungsbahnen innere Ringbahnen am Lagerrohr 10 bzw. der Drehhülse 28 sind.

Bei dem dargestellten Ausführungsbeispiel ist die Kulissenführung 34 so getroffen, daß sie einen vertikalen Nutbereich 34a umfaßt, in welchem sich der Führungsstift 33 bei der vollständigen Einsatzposition entsprechend Fig. 1 befindet, und einen sich daran im rechtwinkligen Übergang anschließenden Teilbereich 34b mit horizontalem Verlauf. Bei diesem letzteren braucht im übrigen nach oben keine Begrenzung vorzuliegen, wie dies auch der Darstellung der Fig. 2 noch entnommen werden kann.

Es ergibt sich dann folgende Grundfunktion. Dreht man den Elektrodeneinsatz 11 manuell in der Pfeilrichtung A aus der in Fig. 1 gezeigten Position heraus, in welcher der Elektrodeneinsatz 11 vollkommen in das es aufnehmende Lagerrohr eingesetzt ist, sämtliche Dichtungen einwandfrei abdichten und die Durchflußöffnung für den Elektrolyt zwischen dem Kanal 26 und der Querbohrung 27 offen ist, dann schlägt der Mitnehmerstift 33 des Drehteils 28 an die in der Zeichenebene der Fig. 2 rechte Nutwand 35 des Führungskulissenabschnitts 34a an und die Drehhülse 28 wird mitgenommen. Hierdurch dreht sich die Durchtrittsbohrung 27 aus der Übereinstimmung mit der Kanalöffnung heraus und das so gebildete Ventil schließt sich.

Es ist vorteilhaft, bis zum vollständigen Verschluß des Ventils den Elektrodeneinsatz noch in seiner völlig eingesetzten und daher auch insgesamt abgedichteten Position zu belassen, so daß sich dieser Vorgang über dem Drehwinkel abspielt, während welchem sich der Führungsstift 23a des Bajonettsystems 22 im horizontalen Bereich 24a der Bajonettbahns befindet.

Daher tritt der Führungsstift 23a vorzugsweise erst dann in den schrägen Verlauf 24b der Bajonettbahn ein, wenn das Ventil völlig geschlossen ist, wodurch der Elektrodeneinsatz 11 gleichzeitig nach unten bei weiterer Drehung abgezogen wird, also eine axiale Bewegung durchführt, was bedeutet, daß der Mitnehmerstift 33 der Drehhülse allmählich aus der Axialteilnut 34a der Kulissenführung frei kommt, wobei die Drehhülse 28 noch um weitere Winkelbeträge so lange verdreht wird, bis der Mitnehmerstift aus dem axialen Bereich der Kulisse völlig ausgetreten ist und sich beispielsweise an der in Fig. 1 mit 33′ bezeichneten Stelle befindet oder an einer anderen, weiter rechts liegenden Position. Jedenfalls stellt dieser Bereich 34b der Kulissenführung für die Ventilbetätigung eine Art Freilauf dar und da die Kulisse nach oben offen ist, läßt sich nach entsprechendem Freikommen der Dichtungen 13a, 13b und 13c der Elektrodeneinsatz nach unten entnehmen.

Das Wiedereinsetzen des Elektrodenteils nach gewünschter Wartung, Reinigung oder Ersatz erklärt sich als kinematische Umkehrung des soeben geschilderten Vorgangs von selbst; dabei sind die relativen Positionen durch den vorhergehenden Entnahmevorgang zwangsläufig so aufeinander ausgerichtet, daß dann, wenn die Führungsstifte 23 im Bajonettbereich in die Führungsbahn(en) gelangen, auch die Mitnehmerstifte 33 richtig stehen, so daß sie durch die sich anschließende Hub/Drehbewegung von der Kulissenführung wieder eingefangen werden können und die Öffnung im Ventilbereich dann erfolgt, wenn die Führungsstifte 23a im horizontalen Bereich 24a der Führungsbahn bei Weiterdrehen weitergleiten.

Eine bevorzugte weitere Ausgestaltung vorliegender Erfindung besteht ferner darin, daß die Führungsbahn im Bajonettbereich zweistufig ausgebildet sein kann, wie bei 24′ gestrichelt dargestellt. Dabei läuft der Vorgang grundsätzlich ähnlich ab; allerdings insofern modifiziert, als beim Einsetzen durch entsprechende Abstimmung der Relativposition zueinander die Öffnung des Ventils schon dann stattfindet, wenn ausgehend von der in Fig. 1 mit C dargestellten Ausgangsposition der Führungsbahn 24′ diese erstmalig in einen horizontalen Führungsbereich übergeht.

Da sich zu diesem Drehwinkelzeitpunkt der ganze Elektrodeneinsatz aber noch nicht in seiner endgültigen Position befindet, ist jedenfalls die untere Ringdichtung 13c noch nicht dicht, während durch eine entsprechende Versetzung die anderen Dichtungen schon ihre jeweiligen Dichtsitze eingenommen haben und, wie gesagt, auch die Elektrolytzufuhr schon erfolgt, wenn man den Elektrodeneinsatz zunächst bis zum Endpunkt des ersten horizontalen Verlaufs, der mit C′ bezeichnet ist, weiterdreht. Daher entspricht der Führungsbahnteilabschnitt C-C′, bei welchem der Elektrodeneinsatz keine Axialbewegung durchführt, der Ventilöffnung und der nunmehr schon fließende Elektrolyt füllt die Elektrolytkammer und entlüftet diese auch, da an geeigneter Stelle, beispielsweise bei 36 in der Referenzelektrolytkammer eine Entlüftungsöffnung vorgesehen ist. Durch diese Entlüftungsöffnung tritt dann schließlich der nachfließende Referenzelektrolyt wieder aus und fließt auch teilweise, da die untere Dichtung 13′ noch offen ist, nach unten weg, so daß die Bedienungsperson dies beobachten und dann in vorteilhafter Weise auch gleich feststellen kann, daß alles in Ordnung ist, das Ventil geöffnet und die Elektrolytkammer entlüftet ist. Anschließend dreht die Bedienungsperson dann den Elektrodenteil weiter, so daß der Führungsstift 23a die nächste Schräge der Führungsbahn überwindet, den Elektrodeneinsatz vollständig in das Lagerrohr mit wirksamer Dichtung bei 13c hinein zieht und das System dann insgesamt in die endgültige Arbeitsposition überführt worden ist.

## Patentansprüche

1. Verfahren zur kontinuierlichen Elektrolytzuführung zu einer Referenzelektrode in der analytischen Chemie, zur pH-Wertbestimmung, Redoxmessung u.dgl., zur direkten oder indirekten, dann über einen Brückenelektrolyten erfolgenden Meßmediumskontaktierung, wobei der mit dem Meßmedium über ein äußeres Diaphragma (16) in Verbindung stehende flüssige, der Referenzelektrode zuzuführende Elektrolyt durch dieses Diaphragma allmählich ausfließt, und wobei ein entnehmbarer, in einem äußeren Lagerrohr abgedichtet gehaltener Elektrodeneinsatz (11) durch seine Entnahmebewegung einen inneren Ventilmechanismus (26, 27, 28) schließt, durch welchen der flüssige Referenzelektrolyt über das äußere Lagerrohr dem Elektrodeneinsatz (11) zugeführt wird, und bei seiner Einführungsbewegung den Ventilmechanismus wieder öffnet.

2. Verfahren nach Anspruch 1, dadurch gekennzeichnet, daß der Elektrodeneinsatz (11) durch eine reine Axialbewegung oder eine reine Drehbewegung oder eine kombinierte gleichzeitige Axial/Drehbewegung in das ihn aufnehmende Lagerrohr (10) eingeführt wird und die Betätigung des Ventilmechanismus abgeleitet ist aus der reinen Axialbewegung, der reinen Drehbewegung oder der kombinierten Axial/Drehbewegung des Elektrodeneinsatzes relativ zum Lagerrohr.

3. Verfahren nach Anspruch 1 oder 2, dadurch gekennzeichnet, daß der Ventilmechanismus ausschließlich durch die relative Drehbewegung des Elektrodeneinsatzes (11) zum Lagerrohr (10) betätigt wird, mit Freigang oder Freilauf, die eine gleichzeitig ablaufende Axialbewegung ermöglichen.

4. Verfahren nach Anspruch 3, dadurch gekennzeichnet, daß durch die Relativverdrehung zwischen Lagerrohr (10) und Elektrodeneinsatz (11) über eine Mitnahmekupplung (33, 34, 35) eine Ventilhülse (28) so verdreht wird, daß der Zufluß an Referenzelektrolyt über miteinander kommunizierende, einen Ventilbereich bildende Querbohrungen (26, 27) geöffnet bzw. unterbrochen wird.

5. Verfahren nach einem der Ansprüche 1-4, dadurch gekennzeichnet, daß die beim Einsetzen bzw. bei der Entnahme des Elektrodeneinsatzes (11) relativ zum Lagerrohr (10) durchgeführte Hub/Drehbewegung zwangsgesteuert wird.

6. Verfahren nach Anspruch 5, dadurch gekennzeichnet, daß die Zwangssteuerung der Hub/Drehbewegung des Elektrodeneinsatzes (11) mittels Gewindeeingriff nach Art eines Bajonettverschlußsystems mit weniger als höchstens einer Umdrehung erfolgt.

7. Verfahren nach Anspruch 5 oder 6, dadurch gekennzeichnet, daß die Zwangsführung durch den Bajonettverschluß einen Teilbereich umfaßt, in welchem eine ausschließliche Drehbewegung erfolgt.

8. Verfahren nach einem der Ansprüche 1 bis 7, dadurch gekennzeichnet, daß die Zwangssteuerung der kombinierten Hub/Drehbewegung des Elektrodeneinsatzes mindestens zwei in unterschiedlicher Höhe verlaufende horizontale reine Drehbewegungsbereiche umfaßt, wobei bei einem Drehbewegungsbereich eine untere Dichtung am Elektrodeneinsatz offen ist zur Ermöglichung einer Entlüftung und Elektrolyt-Fließkontrolle.

9. Vorrichtung zur kontinuierlichen Elektrolytzuführung zu einer Referenzelektrode in der analytischen Chemie, zur pH-Wertbestimmung, Redoxmessung u.dgl., wobei über ein äußeres Diaphragma (16) entweder eine direkte oder über einen Brückenelektrolyten eine indirekte Verbindung zum Meßmedium besteht und der der Referenzelektrode zugeführte flüssige Elektrolyt durch dieses mindestens eine Diaphragma (16) zu dessen Spülung, Reinigung u.dgl. in das Meßmedium übertritt, insbesondere Einstabmeßkette, zur Durchführung des Verfahrens nach einem oder mehreren der Ansprüche 1 bis 8, wobei in einem äußeren Lagerrohr (10) ein über eine Gewindeverbindung in das Lagerrohr eingeführter und gehaltener Elektrodeneinsatz (11) angeordnet ist, zwischen dem Lagerrohr (10) und dem Elektrodeneinsatz (11) ein Ventilmechanismus (26, 27, 28) gebildet ist und durch den Ventilmechanismus der flüssige Referenzelektrolyt über das äußere Lagerrohr (10) dem Elektrodeneinsatz (11) kontinuierlich zugeführt wird, wobei der Ventilmechanismus sich durch die manuelle Entnahme des Elektrodeneinsatzes (11) schließt und durch seine manuelle Wiedereinführung wieder öffnet.

10. Vorrichtung nach Anspruch 9, dadurch gekennzeichnet, daß die Gewindeverbindung von einem Bajonettverschlußsystem (22) gebildet ist, welches nach Eingriff von Führungsstiften (23a) in zugeordnete Führungsbahnen (24) dem Elektrodeneinsatz eine kombinierte Hub/Drehbewegung verleiht.

11. Vorrichtung nach Anspruch 10, dadurch gekennzeichnet, daß der Ventilbereich für die Unterbrechung des Elektrolytzuflusses bei Entnahme des Elektrodeneinsatzes und dessen Aufsteuerung bei erneutem Wiedereinsetzen drehschieberartig ausgebildet und winkelbezogen auf die von dem Bajonettverschlußsystem (22) erzeugte Hub/Drehbewegung synchronisiert ist.

12. Vorrichtung nach Anspruch 9, 10 oder 11, dadurch gekennzeichnet, daß im Ventilbereich eine Drehhülse (28) vorgesehen ist, die über eine Querbohrung (27) einen Durchlaß (26) zum Gehäuse (11a) des Elektrodeneinsatzes (11) je nach Drehposition öffnet oder schließt.

13. Vorrichtung nach einem der Ansprüche 9 bis 12, dadurch gekennzeichnet, daß die Drehhülse (28) in ihrer jeweiligen Drehposition von einer Kulissenführung (34) gesteuert ist, deren relative Winkelorientierung auf die relative Winkelorientierung der Bajonettverschluß-Führungsbahn(en) (24) bezogen ist.

14. Vorrichtung nach einem oder mehreren der Ansprüche 9-13, dadurch gekennzeichnet, daß zur synchronen Steuerung der Drehhülse (28) im Ventilbereich und des Bajonettverschlußsystem (22) für Einsatz und Fixierung des Elektrodeneinsatzes (11) jeweils Mitnehmerstifte (33) an der Drehhülse (28) bzw. Führungsstifte (34) an der Innenwandung des Lagerrohrs (10) sowie Kulissenbahnführungen (34, 34a, 34b, 35; 24, 24a, 24b, 24′) in vorgegebener Winkelorientierung an der äußeren Gehäusewandung des Elektrodeneinsatzes angeordnet sind oder umgekehrt.

15. Vorrichtung nach einem der Ansprüche 9-14, dadurch gekennzeichnet, daß die den Zufluß über eine Tieflochbohrung (26) als Elektrolytzufuhrkanal im Lagerrohr (10) oder in einem in dieses eingesetzten Rohreinsatz (25) öffnende bzw. schließende Querbohrung (27) der Drehhülse (28) in einen äußeren Ringkanal (29) am Gehäuse (11a) des Elektrodeneinsatzes (11) mündet, von welchem der Spülelektrolyt in die Referenzelektrolytkammer einfließt und daß die Drehhülse (28) des Ventilbereichs nach innen und außen über Dichtungen (32a, 32b, 32c) abgedichtet ist.

16. Vorrichtung nach Anspruch 15, dadurch gekennzeichnet, daß in die die Durchtrittsbohrung (27) in der Drehhülse (28) umgebende Wandung eine Ringdichtung (30) eingelegt ist.

17. Vorrichtung nach einem der Ansprüche 9-16, dadurch gekennzeichnet, daß die Außen-Ringdichtungen (13a, 13b, 13c) des Elektrodeneinsatzes (11) so zueinander höhenversetzt angeordnet sind, daß bei unterschiedlichen Hubpositionen des Elektrodeneinsatzes (11) relativ zum Lagerrohr (10) bestimmte obere Dichtungen (13a, 13b) früher zum Sitz kommen als untere Dichtungen (13c).

18. Vorrichtung nach einem der Ansprüche 9-17, dadurch gekennzeichnet, daß die Führungsbahn(en) (24) des Bajonettverschlußsystems (22) gestuft ausgebildet ist (sind) derart, daß sich Schrägführungsabschnitte (24b) für die Durchführung kombinierter Hub/Drehbewegungen des Elektrodeneinsatzes (11) mit Horizontalführungen (24a) für die Durchführung reiner Drehbewegungen mindestens zweimal abwechseln und daß der Drehverschlußmechanismus der Ventilhülse (28) so auf die zwangsweise Mitnahme durch den Bewegungsablauf des Bajonettverschlusssystems (22) abgestimmt ist, daß bei Erreichen des ersten horizontalen Drehplateaus der Bajonettverschluß-Führungsbahn der Elektrolytzufluß schon geöffnet ist bei noch offener unterer Ringdichtung (13c) für den Elektrodeneinsatz (11) derart, daß es zu einer Spülung des Referenzsystems mit merkbarem Überlauf und Austritt des Spülelektrolyten über die untere offene Ringdichtung (13c) kommt.

## Claims

1. Method of continuously supplying electrolyte to a reference electrode in analytical chemistry for pH determination, redox measurement and the like for the purpose of direct or indirect test-medium contacting, said contacting taking place via a bridge electrolyte in the latter case, the liquid electrolyte, which is in communication with the test medium via an outer membrane (16) and is to be supplied to the reference electrode, gradually flowing out through said membrane, and a removable electrode insert (11) held in a sealed manner in an external storage tube closing, as a result of its removal movement, an internal valve mechanism (26, 27, 28) through which the liquid reference electrolyte is supplied to the electrode insert (11) via the external storage tube, and opening the valve mechanism again during its insertion movement.

2. Method according to Claim 1, characterized in that the electrode insert (11) is introduced into the storage tube (10) which receives it as a result of a pure axial movement or a pure rotational movement or a combined simultaneous axial/rotational movement and the actuation of the valve mechanism is derived from the pure axial movement, the pure rotational movement or the combined axial/rotational movement of the electrode insert relative to the storage tube.

3. Method according to Claim 1 or 2, characterized in that the valve mechanism is actuated solely by the relative rotational movement of the electrode insert (11) with respect to the storage tube (10), with free floating or free movement which makes possible an axial movement which proceeds simultaneously.

4. Method according to Claim 3, characterized in that, as a result of the relative rotation between storage tube (10) and electrode insert (11), a valve sleeve (28) is rotated via a drive coupling (33, 34, 35) in such a way that the feed of reference electrolyte is opened up or interrupted via transverse bores (26, 27) which communicate with one another and form a valve region.

5. Method according to one of Claims 1-4, characterized in that the axial/rotational movement performed relative to the storage tube (10) during the insertion or during the removal of the electrode insert (11) is positively controlled.

6. Method according to Claim 5, characterized in that the positive control of the lifting/rotational movement of the electrode insert (11) takes place by means of thread engagement after the fashion of a bayonet-closure system with less than at most one revolution.

7. Method according to Claim 5 or 6, characterized in that the positive guidance by the bayonet closure comprises a subregion in which an exclusive rotational movement takes place.

8. Method according to one of Claims 1 to 7, characterized in that the positive control of the combined lifting/rotational movement of the electrode insert comprises at least two horizontal pure rotational-movement regions which proceed at a different level, a lower seal on the electrode insert being open in the case of one rotational-movement region to facilitate a venting and electrolyte flow control.

9. Device for continuously supplying electrolyte to a reference electrode in analytical chemistry for pH determination, redox measurement and the like, either a direct connection or an indirect connection via a bridge electrolyte to the test medium existing via an external membrane (16) and the liquid electrolyte supplied to the reference electrode passing into the test medium through said at least one membrane (16) for the purpose of rinsing and cleaning it and the like, said device being in particular a combined measuring cell, for carrying out the method according to one or more of Claims 1 to 8, there being disposed in an external storage tube (10) an electrode insert (11) introduced via a threaded joint into the storage tube and held therein, a valve mechanism (26, 27, 28) being formed between the storage tube (10) and the electrode insert (11) and the liquid reference electrolyte being supplied continuously to the electrode insert by the valve mechanism via the external storage tube (10), the valve mechanism closing as a result of the manual removal of the electrode insert (11) and opening again as a result of its manual introduction.

10. Device according to Claim 9, characterized in that the threaded joint is formed by a bayonet-closure system (22) which imparts a combined lifting/rotational movement to the electrode insert after guide pins (23a) have engaged in associated guide tracks (24).

11. Device according to Claim 10, characterized in that the valve region for interrupting the electrolyte supply on removing the electrode insert and opening it up again on reinsertion is of rotary slide valve design and is synchronized in angular relation to the lifting/rotational movement produced by the bayonet-closure system (22).

12. Device according to Claim 9, 10 or 11, characterized in that a rotary sleeve (28) is provided in the valve region and opens or closes, depending on rotational position, a passage (26) to the housing (11) of the electrode insert (11) via a transverse bore (27).

13. Device according to one of Claims 9 to 12, characterized in that the rotary sleeve (28) is controlled in its respective rotational position by a connecting link guide whose relative angular orientation is based on the relative angular orientation of the bayonet-closure guide track(s) (24).

14. Device according to one or more of Claims 9-13, characterized in that, for the synchronous control of the rotary sleeve (28) in the valve region and of the bayonet-closure system (22) for inserting the electrode insert (11) and fixing it in position, drive pins (33) are respectively disposed on the rotary sleeve (28) or guide pins (34) are disposed on the internal wall of the storage tube (10), and also connecting link track guides (34, 34a, 34b, 35; 24, 24a, 24b, 24') are disposed in the specified angular orientation on the external housing wall of the electrode insert or vice versa.

15. Device according to one of Claims 9-14, characterized in that that transverse bore (27) of the rotary sleeve (28) which opens or closes the inflow via a deep-hole bore (26) as electrolyte supply channel in the storage tube (10) or in a tubular insert (25) inserted in said storage tube opens into an external annular channel (29) on the housing (11a) of the electrode insert (11), from which channel the rinsing electrolyte flows into the reference electrolyte chamber, and in that the rotary sleeve (28) of the valve region is sealed inwardly and outwardly by means of seals (32a, 32b, 32c).

16. Device according to Claim 15, characterized in that a ring seal (30) is inserted in the wall surrounding the passage bore (27) in the rotary sleeve (28).

17. Device according to one of Claims 9-16, characterized in that the outer ring seals (13a, 13b, 13c) of the electrode insert (11) are disposed mutually offset in height in such a way that certain upper seals (13a, 13b) are seated earlier than lower seals (13c) in various lifting positions of the electrode insert (11) relative to the storage tube (10).

18. Device according to one of Claims 9-17, characterized in that the guide track(s) (24) of the bayonet-closure system (22) is (are) of stepped construction such that the inclined guide sections (24b) for performing combined lifting/rotational movements of the electrode insert (11) alternate at least twice with horizontal guides (24a) for performing pure rotational movements, and in that the rotational closure mechanism of the valve sleeve (28) is matched to the positive drive resulting from the movement cycle of the bayonet-closure system (22) in such a way that, on reaching the first horizontal rotation plateau of the bayonet-closure guide track, the electrolyte inlet is already open, with the lower ring seal (13c) for the electrode insert (11) still open in such a way that a rinsing of the reference system is brought about with a perceptible overflow and discharge of the rinsing electrolyte via the lower, open ring seal (13c).

## Revendications

1. Méthode de transfert continu d'électrolyte à une électrode de référence en chimie analytique pour la détermination du pH, le mesurage redox et opérations équivalentes, pour la mise en contact de milieu de mesure directe ou indirecte, se faisant à l'aide d'un électrolyte de pontage, méthode dans laquelle l'électrolyte destiné à alimenter l'électrode de référence, liquide et se trouvant en liaison avec le milieu de mesure par l'intermédiaire d'un diaphragme extérieur (16) s'écoule peu à peu à travers ce diaphragme et dans lequel un insert d'électrodes (11) retirable, maintenu à l'état étanche dans un tube de support extérieur ferme par son mouvement de retrait un mécanisme de vanne intérieur (26, 27, 28), à travers lequel l'électrolyte de référence liquide est alimenté par le tube de support extérieur à l'insert d'électrodes (11) et il ouvre à nouveau le mécanisme de vanne lors de son mouvement d'introduction.

2. Méthode selon la revendication 1, caractérisée en ce que l'insert d'électrodes (11) est introduit dans le tube de support (10) le recevant par l'intermédiaire d'un simple mouvement axial ou d'un simple mouvement de rotation ou d'un mouvement simultané et combiné axial et de rotation et en ce que la commande du mécanisme de vanne est dérivée du simple mouvement axial, du simple mouvement de rotation ou du mouvement combiné axial et de rotation de l'insert d'électrodes par rapport au tube de support.

3. Méthode selon la revendication 1 ou la revendication 2, caractérisée en ce que le mécanisme de vanne est exclusivement actionné par le mouvement de rotation relatif de l'insert d'électrode (11) par rapport au tube de support (10), avec marche libre ou course libre, qui permettent un mouvement axial en même temps descendant.

4. Méthode selon la revendication 3, caractérisée en ce que par suite du mouvement relatif entre le tube de support (10) et l'insert d'électrodes (11) un manchon de vanne tourne par l'intermédiaire d'un accouplement d'entraînement (33, 34, 35), de sorte que l'afflux d'électrolyte de référence est ouvert ou interrompu par l'intermédiaire d'alésages transversaux (26, 27) communiquant entre eux et formant une zone de vanne.

5. Méthode selon l'une des revendications 1 à 4, caractérisée en ce que la course/mouvement de rotation exécutés lors de la mise en place ou de l'extraction de l'insert d'électrode (11) par rapport au tube support (10) est commandé en forçant.

6. Méthode selon la revendication 5, caractérisée en ce que la commande forcée de la course/mouvement de rotation de l'insert d'électrodes (11) est réalisée au moyen d'un engagement par filetage selon le type d'un système de fermeture à baïonnette avec moins qu'au maximum un tour.

7. Méthode selon la revendication 5 ou la revendication 6, caractérisée en ce que le guidage forcé par la fermeture à baïonnette comprend une zone partielle, dans laquelle se produit exclusivement un mouvement de rotation.

8. Méthode selon l'une des revendications 1 à 7, caractérisée en ce que la commande forcée de la course/mouvement de rotation combinés de l'insert d'électrodes comprend au moins deux niveaux de mouvement de rotation simples et horizontaux se développant à des hauteurs différentes, tandis que pour un niveau de mouvement de rotation une garniture d'étanchéité inférieure sur l'insert d'électrodes est ouverte pour rendre possible une aération et un contrôle de l'écoulement de l'électrolyte.

9. Méthode d'alimentation continue d'électrolyte à une électrode de référence en chimie analytique pour la détermination du pH, le mesurage redox et autres opérations analogues, dans lequel existe par un diaphragme extérieur (16) soit une liaison directe, soit une liaison indirecte par l'intermédiaire d'un électrolyte de pontage vers le milieu de mesure et l'électrolyte liquide alimenté à l'électrode de référence passe pour cela dans le milieu de mesure au moins sur un diaphragme (16) pour son rinçage, nettoyage et opérations analogues, en particulier sur une chaîne de mesure à une échelle, pour l'exécution de la méthode selon l'une ou plusieurs des revendications 1 à 8, dans lequel dans un tube-support extérieur (10) est disposé un insert d'électrodes (11) introduit et maintenu par une liaison par filetage dans le tube support, un mécanisme de vanne (26, 27, 28) est formé entre le tube support (10) et l'insert d'électrode (11) et à travers le mécanisme de vanne, l'électrolyte liquide de référence est amené continuellement à l'insert d'électrodes (11) par l'intermédiaire du tube de support extérieur (10), tandis que le mécanisme de vanne se ferme par suite de l'extraction manuelle de l'insert d'électrodes (11) et s'ouvre à nouveau par suite de sa réintroduction manuelle.

10. Méthode selon la revendication 9, caractérisée en ce que la liaison par filetage est constituée par un système de fermeture à baïonnette (22), qui après engagement de tenons de guidage (23a) dans des glissières (24) associées concède à l'insert d'électrodes un mouvement combiné de levage et de rotation.

11. Méthode selon la revendication 10, caractérisée en ce que la zone de la vanne destinée à interrompe l'alimentation d'électrolyte, lors du retrait de l'insert d'électrodes et sa commande d'ouverture lors d'une réinsertion renouvellée, est réalisée sous la forme d'un tiroir rotatif et est synchronisée en référence angulaire sur le mouvement course/rotation exécuté par le système de fermeture à baïonnette.

12. Méthode selon la revendication 9, 10 ou 11, caractérisée en ce que dans la zone de la vanne est prévu un manchon (28) rotatif, qui par l'intermédiaire d'un alésage transversal (27) ouvre ou ferme selon sa position de rotation un passage (26) vers le boîtier (11a) de l'insert des électrodes.

13. Méthode selon l'une des revendications 9 à 12, caractérisée en ce que le manchon rotatif (28) est commandé dans sa position respective de rotation par un guidage de coulisse (34), dont l'orientation angulaire relative est rapportée à l'orientation angulaire relative de la ou des glissières de guidage (24) de la fermeture à baïonnette.

14. Méthode selon l'une ou plusieurs des revendications 9-13, caractérisée en ce que pour la commande synchrone du manchon tournant (28) dans la zone de vanne et du système de fermeture à baïonnette (22) destiné à introduire et fixer l'insert d'électrodes (11) sont placées ou inversées respectivement des broches d'accompagnement (33) sur le manchon de rotation (28) ou des tenons de guidage (34) sur la paroi interne du tube support (10) ainsi que des guidages de coulisse (34, 34a, 34b, 35 ; 24, 24a, 24b, 24') dans une orientation angulaire préétablie sur la paroi extérieure de l'insert d'électrodes.

15. Méthode selon l'une des revendications 9-14, caractérisée en ce que l'alésage transversal (27) du manchon pivotant (28) ouvrant ou fermant le flux par un alésage (26) profond, comme canal d'alimentation en électrolyte dans le tube support (10) ou dans un insert tubulaire (25) introduit dans celui-ci débouche dans une canal annulaire extérieur (29) sur le boîtier (11a) de l'insert d'électrolytes (11), à partir duquel l'électrolyte de rinçage coule dans la chambre de l'électrolyte de référence et en ce que le manchon pivotant (28) de la zone de vanne est rendu étanche vers l'intérieur et l'extérieur par des garnitures d'étanchéité (32a, 32b, 32c).

16. Méthode selon la revendication 15, caractérisée en ce que, dans la paroi entourant l'alésage de passage (27) du manchon pivotant (28), est insérée une garniture d'étanchéité annulaire (30).

17. Méthode selon l'une des revendications 9-16, caractérisée en ce que les garnitures d'étanchéité annulaires extérieures (13a, 13b, 13c) de l'insert des électrolytes (11) sont disposées avec un décalage dans le sens de la hauteur l'une par rapport à l'autre, de sorte que lors de positions de levage différentes de l'insert d'électrodes (11) par rapport au tube support (10) certaines garnitures d'étanchéité supérieures (13a, 13b) viennent dans le logement plus tôt que des garnitures d'étanchéité inférieures (13c).

18. Méthode selon l'une des revendications 9-17, caractérisée en ce que la ou les voie(s) de guidage (24) du système de fermeture à baïonnette (22) est (sont) réalisée(s) en degrés, de manière que des tronçons de guidage incliné (24b) pour la réalisation des mouvements combinés de course et de rotation de l'insert d'électrodes (11) s'alternent au moins deux fois avec des guidages horizontaux (24a) pour la réalisation de simples mouvements de rotation et que le mécanisme de fermeture de la rotation du manchon de vanne (28) est synchronisé sur l'entraînement forcé dû à l'allure du mouvement du système de fermeture à baïonnettes (22), de sorte qu'en atteignant le premier plateau de rotation horizontal de la trajectoire de guidage de la fermeture à baïonnette l'afflux de l'électrolyte est déjà ouvert alors que la garniture d'étanchéité annulaire inférieure (13c) de l'insert d'électrode (11) est encore libre, permettant ainsi un rinçage du système de référence par débordement sensible et une sortie de l'électrolyte de rinçage par la garniture d'étanchéité (13c) inférieure ouverte.
